# EUROPEAN PATENT APPLICATION

(11) **EP 4 769 728 A1**
(43) Date of publication of application: **01.07.2026**
(21) Application number: 25849544.9
(22) Date of filing: 20.03.2025
(51) Int. Cl.: H01M 50/244, H01M 50/249, H01M 50/24, H01M 50/342, H01M 50/289

(54) **POWER BATTERY PACK**

(30) Priority: 14.10.2024 CN 202411434720; 14.10.2024 CN 202422485499 U
(71) Applicant: Eve Energy Co., Ltd., Huizhou, Guangdong 516006 (CN)
(72) Inventor: The designation of the inventor has not yet been filed
(74) Representative: Grünecker Patent- und Rechtsanwälte PartG mbB
(86) International application number: PCT/CN2025/083741
(87) International publication number: WO 2026/081413

(57) **Abstract**

Provided is a power battery pack. The power battery pack includes a battery cell (1), an electric control module (3), and a casing assembly (2) composed of a lower casing (21) and a protective end cover (22). The lower casing (21) is provided with a receiving groove (211); the protective end cover (22) is configured to enclose the receiving groove (211), an inner wall of the receiving groove (211) is provided with a glue potting structure (212), and the glue potting structure (212) is filled with an insulating gel (4) having a failure temperature lower than the thermal runaway temperature of the battery cell (1); the insulating gel (4) is configured to bond the protective end cover (22) and the lower casing (21) and fix the battery cell (1); and the lower casing is provided with a limit groove (213) communicating with the glue potting structure (212), and a part of the electric control module (3) is accommodated in the limit groove (213).

## Description

The present application claims priority to Chinese Patent Application No. 202411434720.9, filed with the China National Intellectual Property Administration (CNIPA) on Oct. 14, 2024, and claims priority to Chinese Patent Application No. 202422485499.1, filed with the CNIPA on Oct. 14, 2024, the disclosures of which are incorporated herein by reference in their entireties.

### TECHNICAL FIELD

The present application relates to the technical field of batteries, for example, a power battery pack.

### BACKGROUND

Currently, new energy vehicles are attracting increasingly social attention, and the cost of electric vehicles is widely concerned by original equipment manufacturers, battery producers, and consumers. A battery pack is used as a component accounting for a significant proportion of the cost of the electric vehicles, and the reduction of the cost of the battery pack plays an extremely important role. Therefore, the market's requirements for the energy density of the battery pack, the space utilization rate inside the battery pack, and the usage safety of the battery pack are increasingly high.

A vehicle-mounted battery pack typically includes multiple battery cells for energy supply, an electric control module for managing the multiple battery cells, and a battery pack casing for providing protection. The multiple battery cells and the electric control module are disposed within the battery pack casing.

### Technical problem

In the vehicle-mounted battery pack, on the one hand, due to the presence of factors such as vibration in the operating environment thereof, a large number of fixing members and sealing members are typically provided to fix and insulate-seal the battery cells and the electric control module within the vehicle-mounted battery pack, which ensures safety and protective performance during operation, but results in a large number of components, high manufacturing costs, and complicated assembly processes. On the other hand, in order to prevent external impurities or moisture from entering the battery pack casing and causing corrosion to the battery cells and the electric control module, the battery pack casing must have good sealing performance. However, when thermal runaway occurs in the battery cells, high-temperature high-pressure gases breaking through the explosion-proof valves of the battery cells will flow randomly inside the battery pack casing without being discharged, thereby causing damage to other battery cells and electric control modules, and resulting in poor protection and safety.

### SUMMARY

### Technical solutions

The present application provides a power battery pack. The power battery pack includes multiple battery cells, a casing assembly and an electric control module. The casing assembly includes a lower casing and protective end covers, where a side of the lower casing is provided with receiving grooves, the receiving grooves are in one-to-one correspondence with the multiple battery cells and are independent to each other, a protective end cover of the protective end covers is covered at an opening of a receiving groove of the receiving grooves and encloses the receiving groove, to form a receiving cavity for axially accommodating a battery cell of the multiple battery cells, an inner wall of the receiving groove is provided with a glue potting structure, the glue potting structure is filled with an insulating gel having a failure temperature lower than a thermal runaway temperature of the multiple battery cells, the insulating gel is configured to bond the protective end covers and the lower casing and fix the multiple battery cells located within the receiving cavities, a side of the lower casing facing away from the protective end covers is provided with limit grooves in one-to-one correspondence with the receiving cavities, and a limit groove of the limit grooves communicates with the glue potting structure. The electric control module is disposed on the lower casing, a part of the electric control module is accommodated within the limit grooves, and the electric control module is configured to manage the multiple battery cells.

Optionally, the glue potting structure includes a glue guide groove, a glue injection port and a communication port, the glue guide groove is disposed on a groove wall of the receiving groove, the glue injection port and the communication port are disposed within a limit groove of the limit grooves, the glue injection port is configured to communicate with the limit grooves and the receiving cavities, and the communication port is configured to communicate with the limit groove and the glue guide groove.

Optionally, the protective end cover includes a closure portion and an abutment portion which are integrally formed through an injection molding process, an annular protrusion formed by extending a surface of the closure portion in a direction close to the multiple battery cells is the abutment portion, the closure portion is disposed at an opening of a receiving groove of the receiving grooves and encloses the receiving groove, the abutment portion is inserted into the receiving groove to abut against a battery cell of the multiple battery cells, a glue reservoir communicating with the glue guide groove is formed between the abutment portion and a groove wall of the receiving groove, and the insulating gel filled in the glue reservoir is configured to bond the closure portion to the lower casing.

Optionally, the glue potting structure further includes a glue overflow groove, the glue overflow groove is disposed on the groove wall of the receiving groove and communicates with the glue reservoir, and the glue overflow groove and the glue guide groove are symmetrically distributed on the groove wall of the receiving groove.

Optionally, the protective end cover further includes a vent cavity and a weakened structure, the vent cavity is disposed on the abutment portion, and a region, enclosed by the vent cavity, in the closure portion is provided with an annular groove with a V-shaped or U-shaped cross section, to form the weakened structure, and a thickness of the weakened structure is less than a thickness of a portion of the closure portion excluding the region enclosed by the vent cavity.

Optionally, the protective end cover further includes multiple limit portions configured to enclose the glue overflow groove and the glue guide groove, an outer edge of the closure portion extends in a direction facing away from a central axis to form the multiple limit portions uniformly distributed on the outer edge of the closure portion, the multiple limit portions are accommodated in corresponding glue overflow grooves and corresponding glue guide grooves, and a protection fillet is disposed at a corner of a side of a limit portion of the multiple limit portions facing away from the closure portion.

Optionally, the electric control module includes an acquisition board set and a battery management system (BMS) assembly, the BMS assembly is disposed on an upper surface of the lower casing, a part of the acquisition board set is integrated on the upper surface of the lower casing and is electrically connected to the BMS assembly, and another part of the acquisition board set is accommodated within the limit grooves and is electrically connected to the multiple battery cells.

Optionally, the electric control module further includes a temperature sensor, a side of the lower casing facing towards the BMS assembly is provided with a mounting through hole, one side of the temperature sensor is connected to the BMS assembly, and another side of the temperature sensor abuts against the multiple battery cells through the mounting through hole.

Optionally, the casing assembly further includes a casing upper cover, the casing upper cover is covered on a side of the BMS assembly facing away from the lower casing, a side of the lower casing facing towards the casing upper cover is provided with a mounting slot, a side of the casing upper cover facing towards the lower casing is provided with an insertion protrusion, and the insertion protrusion is inserted into the mounting slot.

Optionally, the acquisition board set and the lower casing are integrally formed through injection molding as a one-piece structure.

### Beneficial effects

The present application provides a power battery pack. In the power battery pack, on the one hand, the inner wall of the receiving groove of the lower casing is provided with the glue potting structure, and the glue potting structure communicates with the limit groove configured to accommodate part of the electric control module, so that the insulating gel may simultaneously be filled in the limit groove and the receiving cavity through the glue potting structure during potting, thereby achieving simultaneous fixation and insulation sealing for the battery cell located within the receiving cavity and for a part, accommodated in the limit groove, of the electric control module. Compared with the conventional battery pack, the power battery pack in the present application reduces the number of components required for insulation and fixation, lowers manufacturing costs, streamlines steps in the assembly process, and improves assembly efficiency. On the other hand, the failure temperature of the insulating gel is less than the thermal runaway temperature of the battery cell, and the lower casing is bonded with the protective end cover through the insulating gel, so that when thermal runaway occurs, the insulating gel melts upon heating, and the bonding strength between the protective end cover and the lower casing is reduced. As a result, the protective end cover opens under pressure to release high-temperature high-pressure gases for pressure relief and protection, thereby enhancing safety and protective performance.

### BRIEF DESCRIPTION OF THE DRAWINGS

FIG. 1 is an exploded view of a power battery pack according to some embodiments of the present application;
FIG. 2 is an assembly view of a power battery pack according to some embodiments of the present application;
FIG. 3 is a perspective view of a lower casing in a power battery pack according to some embodiments of the present application;
FIG. 4 is a plan view of a lower casing in a power battery pack according to some embodiments of the present application;
FIG. 5 is a schematic view of a connection of a battery cell and an insulating gel in a power battery pack according to some embodiments of the present application;
FIG. 6 is a perspective view of a protective end cover in a power battery pack according to some embodiments of the present application;
FIG. 7 is a plan cross-sectional view of a protective end cover in a power battery pack according to some embodiments of the present application; and
FIG. 8 is a schematic view showing a partial structure of a battery management system (BMS) assembly integrated with a temperature sensor in a power battery pack according to some embodiments of the present application.

### List of reference numbers

- 1: battery cell
- 2: casing assembly
- 21: lower casing
- 211: receiving groove
- 212: glue potting structure
- 2121: glue guide groove
- 2122: glue injection port
- 2123: communication port
- 2124: glue overflow groove
- 213: limit groove
- 214: mounting slot
- 215: mounting through hole
- 22: protective end cover
- 221: closure portion
- 222: abutment portion
- 223: vent cavity
- 224: weakened structure
- 225: limit portion
- 226: protective fillet
- 23: casing upper cover
- 231: plug-in protrusion
- 3: electric control module
- 31: acquisition board set
- 311: series-connected bus bar
- 312: BMS positive input bus bar
- 313: BMS positive output bus bar
- 314: BMS negative input bus bar
- 315: BMS negative output bus bar
- 32: BMS assembly
- 33: temperature sensor
- 4: insulating gel
- 41: first limit post
- 42: second limit post
- 43: bottom glue ring
- 44: fixed sealing member

### DETAILED DESCRIPTION

In order to reduce manufacturing costs, simplify the assembly process, and improve safety and protective performance, this embodiment provides a power battery pack.

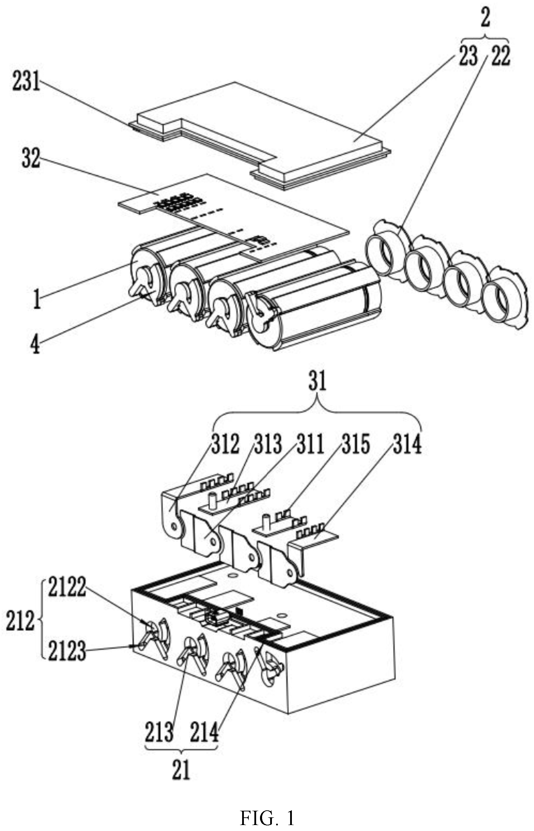

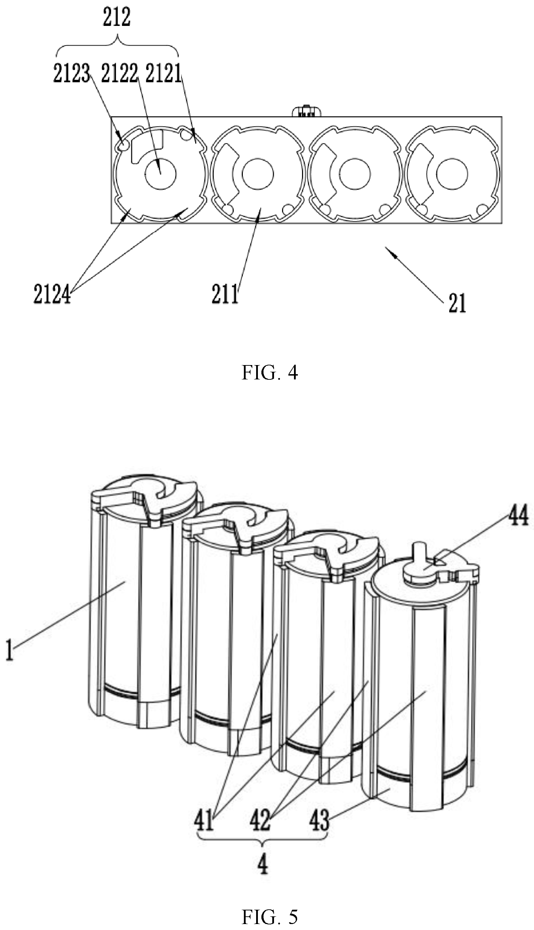

As shown in FIG. 1 to FIG. 8, the power battery pack includes multiple battery cells 1, a casing assembly 2 and an electric control module 3. The casing assembly 2 includes a lower casing 21 and protective end covers 22. A side of the lower casing 21 is provided with receiving grooves 211 which are in one-to-one correspondence with the multiple battery cells 1 and are independent from each other. The protective end cover 22 is disposed at an opening of a receiving groove 211 of the receiving grooves 211 and encloses the receiving groove 211, to form a receiving cavity for axially accommodating the battery cell 1. An inner wall of the receiving groove 211 is provided with a glue potting structure 212, and the glue potting structure 212 is filled with an insulating gel 4 having a failure temperature lower than a thermal runaway temperature of the multiple battery cells 1. The insulating gel 4 is configured to bond the protective end covers 22 and the lower casing 21 and fix the battery cells 1 located within the receiving cavities. A side of the lower casing 21 facing away from the protective end covers 22 is provided with limit grooves 213 in one-to-one correspondence with the receiving cavities, and the limit groove 213 communicates with the glue potting structure. The electric control module 3 is disposed on the lower casing 21, a part of the electric control module 3 is accommodated within the limit grooves 213, and the electric control module 3 is configured to manage the multiple battery cells 1.

In the power battery pack, on the one hand, the inner wall of the receiving groove 211 of the lower casing 21 is provided with the glue potting structure 212, and the glue potting structure 212 communicates with the limit groove 213 configured to accommodate part of the electric control module 3, so that the insulating gel 4 may simultaneously be filled in the limit groove 213 and the receiving cavity through the glue potting structure 212 during potting, thereby achieving simultaneous fixation and insulation sealing for the battery cell 1 located within the receiving cavity and for a part, accommodated in the limit groove 213, of the electric control module 3. Compared with the conventional battery pack, the power battery pack in the present application reduces the number of components required for insulation and fixation, lowers the manufacturing costs, streamlines steps in the assembly process, and improves the assembly efficiency. On the other hand, the failure temperature of the insulating gel 4 is less than the thermal runaway temperature of the battery cell 1, the lower casing 21 is bonded with the protective end cover 22 through the insulating gel 4, so that when thermal runaway occurs, the insulating gel 4 melts upon heating, and the bonding strength between the protective end cover 22 and the lower casing 21 is reduced. As a result, the protective end cover 22 opens under pressure to release high-temperature high-pressure gases for pressure relief and protection, thereby enhancing safety and protective performance. In this embodiment, the battery cell 1 in the power battery pack is a 12V large cylindrical cell.

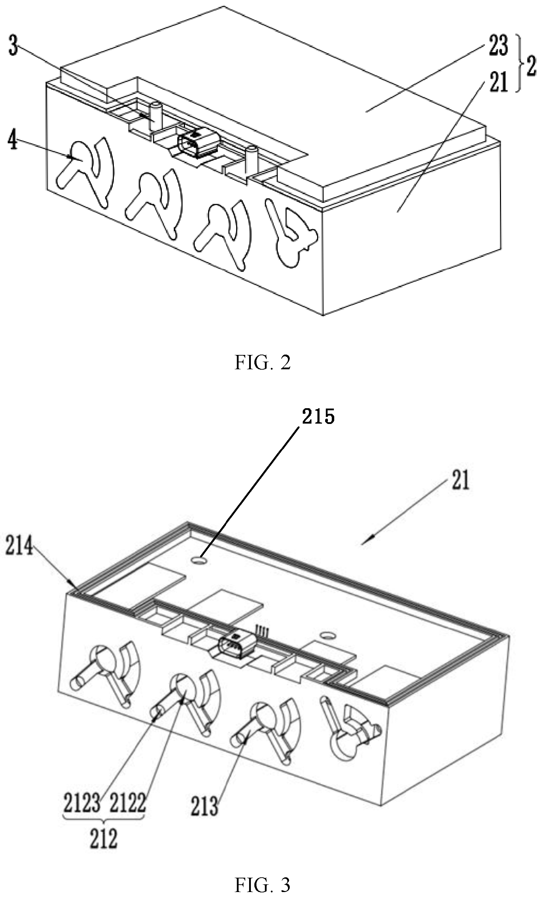

Optionally, as shown in FIGS. 3, 4 and 5, the glue potting structure 212 includes a glue guide groove 221, a glue injection port 2122 and a communication port 2123. The glue guide groove 2121 is disposed on a groove wall of the receiving groove 211. The glue injection port 2122 and the communication port 2123 are disposed within the limit groove 213. The glue injection port 2122 is configured to communicate with the limit groove 213 and the receiving cavity. The communication port 2123 is configured to communicate with the limit groove 213 and the glue guide groove 2121. The glue injection port 2122 and the communication port 2123 are disposed within the limit groove 213, and the glue guide groove 2121, communicating with the limit groove 213 through the communication port 2123, is disposed on the groove wall of the receiving groove 211, so that when the insulating gel 4 is injected, the insulating gel 4 passes through the glue injection port 2122 to fix an end of the battery cell 1 and provide insulation sealing, then overflows into the limit groove 213, and thereafter flows along the limit groove 213 into the glue guide groove 2121 through the communication port 2123. The glue guide groove 2121, on the one hand, guides the flow of the insulating gel 4 inside the receiving cavity, and on the other hand, after the glue potting is completed, the insulating gel 4 is solidified in the limit groove 213 to form a fixed sealing member 44 and is solidified in the glue guide groove 2121 to form a first limit post 41so as to limit the battery cell 1 accommodated in the receiving cavity to prevent the battery cell 1 from displacing in the receiving cavity. The number of the glue guide grooves 2121 may be set freely according to requirements. In this embodiment, each receiving cavity is provided with two glue guide grooves 2121, and each glue guide groove 2121 is provided with the communication port 2123 communicating with the limit groove 213.

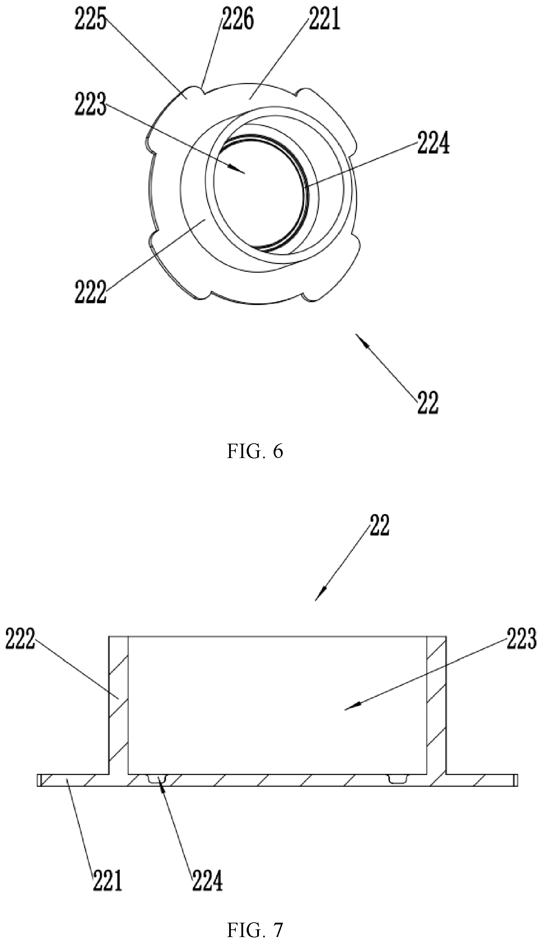

Optionally, as shown in FIGS. 6 and 7, the protective end cover 22 includes a closure portion 221 and an abutment portion 222, which are integrally formed through an injection molding process. An annular protrusion formed by extending a surface of the closure portion 221 in a direction close to the battery cell 1 is the abutment portion 222. The closure portion 221 is disposed at an opening of the receiving groove 211 and encloses the receiving groove 211. The abutment portion 222 is inserted into the receiving groove 211 to abut against the battery cell 1. A glue reservoir communicating with the glue guide groove 2121 is formed between the abutment portion 222 and the groove wall of the receiving groove 211, and the insulating gel 4 filled in the glue reservoir is configured to bond the closure portion 221 to the lower casing 21. The closure portion 221 and the abutment portion 222 form the protective end cover 22, so that the protective end cover 22, on the one hand, seals the opening of the receiving groove 211, and on the other hand, limits and fixes the battery cell 1 through the abutment portion 222 to prevent the battery cell 1 from displacing within the receiving groove 211. Moreover, the glue reservoir communicating with the glue guide groove 2121 is formed between the abutment portion 222 and the groove wall of the receiving groove 211, so that during glue potting, the insulating gel 4 flows into the glue reservoir and is solidified to form a bottom glue ring 43, where the bottom glue ring 43, on the one hand, connects and fixes the protective end cap 22 to the receiving groove 211, thereby achieving the connection of the protective end cover 22 and the lower casing 21, and on the other hand, provides insulation protection and cushioning protection.

Optionally, as shown in FIGS. 3, 4, and 5, the glue potting structure 212 further includes a glue overflow groove 2124. The glue overflow groove 2124 is disposed on the groove wall of the receiving groove 211 and communicates with the glue reservoir, and the glue overflow groove 2124 and the glue guide groove 2121 are symmetrically distributed on the groove wall of the receiving groove 211. The glue overflow groove 2124 communicating with the glue reservoir is disposed on the side wall of the receiving groove 211, so that on the one hand, the glue overflow groove 2124 guides the flow of the insulating gel 4 overflowing from the glue reservoir inside the receiving cavity, and on the other hand, after the glue potting is completed, the insulating gel 4 is solidified in the glue overflow groove 2124 to form a second limit post 42, where the second limit post 42 cooperates with the first limit post 41 formed by the solidification of the insulating gel 4 in the glue guide groove 2121, to strengthen the limiting strength for the battery cell 1 accommodated within the receiving cavity. The number of glue overflow grooves 2124 may be freely set according to requirements. In this embodiment, the number of glue overflow grooves 2124 is kept consistent with the number of the glue guide grooves 2121, with both being two.

In this embodiment, the glue overflow groove 2124 and the glue guide groove 2121 are symmetrically distributed on the groove wall of the receiving groove 211. The glue overflow groove 2124 and the glue guide groove 2121 are symmetrically distributed on the groove wall of the receiving groove 211, so that after the insulating gel 4 is solidified in the glue overflow groove 2124 to form the second limit post 42 and is solidified in the glue guide groove 2121 to form the first limit post 41, the first limit post 41 and the second limit post 42 are uniformly distributed on the outer side of the battery cell 1, thereby ensuring the uniformity of force applied to the battery cell 1. Optionally, as shown in FIGS. 6 and 7, the protective end cover 22 further includes a vent cavity 223 and a weakened structure 224. The vent cavity 223 is disposed on the abutment portion 222, and a region, enclosed by the vent cavity 223, in the closure portion 221 is provided with an annular groove with a V-shaped or U-shaped cross-section, to form the weakened structure 224. A thickness of the weakened structure 224 is less than a thickness of a portion of the closure portion 221 excluding the region enclosed by the vent cavity 223.

The vent cavity 223 is disposed on the abutment portion 222, so that when the battery cell 1 is subjected to thermal runaway, the vent cavity 223 is used to guide high-pressure high-temperature gases ejected from the battery cell 1. The weakened structure 224 with the thickness less than other parts of the protective end cover 22 in the region enclosed by the vent cavity 223 in the closure portion 221, so that the high-temperature high-pressure gases may discharge into the external environment by breaking through the weakened structure 224 with lower structural strength, to perform a single pressure relief, thereby achieving the first-layer protection. If the pressure relief still fails to meet the requirement, as the temperature gradually increases, the high-pressure high-temperature gases will melt the bottom glue ring 43 located on the outer side of the abutment portion 222, thereby reducing the connection strength between the protective end cover 22 and the lower casing 21. Thus, when the weakened structure 224 cannot satisfy the discharge demand, the high-temperature high-pressure gases may directly break through the protective end cover 22 for secondary pressure relief, thereby achieving the second-layer protection. The dual-pressure-relief protection ensures the smooth discharge of the high-temperature high-pressure gases during thermal runaway, thereby improving the safety of the battery pack casing. In this embodiment, the weakened structure 224 is an annular groove disposed on the closure portion 221.

In this embodiment, the groove depth of the weakened structure 224 may be freely set according to design requirements, and a cross-section of the weakened structure 224 in the form of an annular groove is designed as a V-shape or a U-shape. The annular groove with the V-shaped or U-shaped cross-section is adopted, so that the annular groove has a tendency to converge the high-pressure high-temperature gases at the groove bottom. Moreover, when the high-pressure high-temperature gases enter the annular groove, they become more concentrated, which is more conducive to breaking through the weakened structure 224 and being discharged into the external environment.

Optionally, as shown in FIG. 6, the protective end cover 22 further includes multiple limit portions 225 configured to enclose the glue overflow groove 2124 and the glue guide groove 2121. An outer edge of the closure portion 221 extends in a direction facing away from a central axis to form the multiple limit portions 225 uniformly distributed on the outer edge of the closure portion 221. The multiple limit portions 225 are accommodated within the corresponding glue overflow grooves 2124 and the corresponding glue guide grooves 2121. A protection fillet 226 is disposed at a corner of a side of the limit portion 225 facing away from the closure portion 221. When the protective end cover 22 is connected to the lower casing 21, the limit portion 225 is used to increase the connection area between the protective end cover 22 and the lower casing 21, thereby ensuring the connection strength between the protective end cover 22 and the lower casing 21.

In this embodiment, the number of limit portions 225 is kept consistent with the total number of glue guide grooves 2121 and glue overflow grooves 2124. When the protective end cover 22 is connected to the lower casing 21, the limit portion 225 may be embedded into the glue guide groove 2121 and the glue overflow groove 2124 to achieve the limit effect on the protective end cover 22. The outer edge of the closure portion 221 extends in the direction facing away from the central axis to form the limit portion 225, and the protection fillet 226 is disposed at the corner of the side of the limit portion 225 facing away from the closure portion 221. The protection fillet 226 is disposed at the corner of the side of the limit portion 225 facing away from the closure portion 221, thereby preventing the tip of the corner from damaging the glue guide groove 2121 and the glue overflow groove 2124 when the limit portion 225 is accommodated in the glue guide groove 2121 and the glue overflow groove 2124, and thus avoiding any impact on the sealing performance of the protective end cover 22 with respect to the receiving groove 211.

The protective end cover 22 is integrally formed through the injection molding process, to simultaneously form the closure portion 221, the abutment portion 222, the vent cavity 223, the weakened structure 224, the limit portion 225, and the protective fillet 226 that constitute the protective end cover 22.

Optionally, as shown in FIG. 1, the electric control module 3 includes an acquisition board set 31 and a battery management system (BMS) assembly 32. The BMS assembly 32 is disposed on an upper surface of the lower casing 21. A part of the acquisition board set 31 is integrated on the upper surface of the lower casing 21 and is electrically connected to the BMS assembly 32, and another part of the acquisition board set 31 is accommodated within the limit groove 213 and is electrically connected to the battery cell 1. The acquisition board set 31 that acquires information from the battery cell 1 is accommodated within the limit groove 213, so that the position of the acquisition board set 31 is fixed after glue injection, thereby preventing the acquisition board set 31 from displacing due to external factors and ensuring accurate acquisition of information from the battery cell 1.

In this embodiment, the acquisition board set 31 includes a series-connected bus bar 311, a BMS positive input bus bar 312, a BMS positive output bus bar 313, a BMS negative input bus bar 314, and a BMS negative output bus bar 315. The series-connected bus bar 311 is configured to implement conduction between the multiple battery cells 1. The BMS positive input bus bar 312 and the BMS negative input bus bar 314 are configured to connect the series-connected bus bar 311 with the BMS assembly 32. Thereafter, the BMS positive output bus bar 313 and the BMS negative output bus bar 315 connect the BMS assembly 32 with an external device. Additionally, the acquisition board set 31 and the lower casing 21 are integrally formed through injection molding as a one-piece structure, so that the acquisition board assembly 31 and the lower casing 21 are integrated into one piece through injection molding, and the receiving groove 211, the limit groove 213, and the glue potting structure 212 that communicates the limit groove 213 and the receiving cavity may also be directly constructed on the lower casing 21.

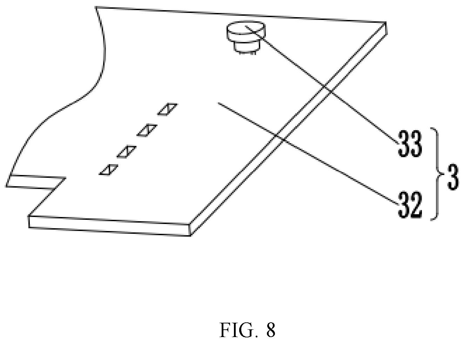

Optionally, as shown in FIGS. 1 and 8, the electronic control module 3 further includes a temperature sensor 33. A side of the lower casing 21 facing towards the BMS assembly 32 is provided with a mounting through hole 215. A side of the temperature sensor 33 is connected to the BMS assembly 32, and another side of the temperature sensor 33 abuts against the battery cell 1 via the mounting through hole 215. The temperature sensor 33 is integrated on the BMS assembly 32, and another side of the temperature sensor 33 directly passes through the mounting through hole 215 on the lower casing 21, so that the temperature of the battery cell 1 is collected directly, thereby eliminating the need for wire harnesses, reducing connection costs, minimizing space requirements, and making the structure more compact.

In this embodiment, the side of the temperature sensor 33 abutting against the battery cell 1 is coated with a thermal conductive structural adhesive, so that on the one hand, the connection and fixation of the temperature sensor 33 to the battery cell 1 is achieved, and on the other hand, the rapid transfer of heat from the battery cell 1 to the temperature sensor 33 can be achieved through the thermally conductive structural glue.

Optionally, as shown in FIGS. 1 and 3, the casing assembly 2 further includes a casing upper cover 23, and the casing upper cover 23 is covered on a side of the BMS assembly 32 facing away from the lower casing 21. A side of the lower casing 21 facing towards the casing upper cover 23 is provided with a mounting slot 214. A side of the casing upper cover 23 facing towards the lower casing 21 is provided with an insertion protrusion 231, and the insertion protrusion 231 is inserted into the mounting slot 214. On the one hand, the casing upper cover 23 is covered on the side of the BMS assembly 32 facing away from the lower casing 21, thereby protecting the BMS assembly 32 and preventing the BMS assembly 32 from being exposed to the outside and suffering damage. On the other hand, the mounting slot 214 is disposed on the lower casing 21, the insertion protrusion 231 is disposed on the casing upper cover 23, so that the insertion protrusion 231 is inserted into the mounting slot 214, thereby facilitating the assembly of the lower casing 21 and the casing upper cover 23, ensuring a tighter connection between the lower casing 21 and the casing upper cover 23, and enhancing the sealing performance after the lower casing 21 is connected to the casing upper cover 23.

## Claims

1. A power battery pack, comprising:
a plurality of battery cells (1);
a casing assembly (2) comprising a lower casing (21) and a plurality of protective end covers (22), wherein a side of the lower casing (21) is provided with receiving grooves (211) which are in one-to-one correspondence with the plurality of battery cells (1) and are independent to each other, a protective end cover (22) of the plurality of protective end covers (22) is disposed at an opening of a receiving groove (211) of the receiving grooves (211) and encloses the receiving groove (211) to form a receiving cavity for axially accommodating a battery cell (1) of the plurality of battery cells (1), an inner wall of the receiving groove (211) is provided with a glue potting structure (212), the glue potting structure (212) is filled with an insulating gel (4) having a failure temperature lower than a thermal runaway temperature of the plurality of battery cells (1), the insulating gel (4) is configured to bond the protective end covers (22) and the lower casing (21) and fix the plurality of battery cells (1) located within the receiving cavities, a side of the lower casing (21) facing away from the protective end covers (22) is provided with limit grooves (213) in one-to-one correspondence with the receiving cavities, and a limit groove (213) of the limit grooves (213) communicates with the glue potting structure (212); and
an electric control module (3) disposed on the lower casing (21), wherein a part of the electric control module (3) is accommodated within the limit grooves (213), and the electric control module (3) is configured to manage the plurality of battery cells (1).

2. The power battery pack of claim 1, wherein the glue potting structure (212) comprises a glue guide groove (2121), a glue injection port (2122) and a communication port (2123), the glue guide groove (2121) is disposed on a groove wall of the receiving groove (211), the glue injection port (2122) and the communication port (2123) are disposed within a limit groove (213) of the limit grooves (213), the glue injection port (2122) is configured to communicate with the limit groove (213) and the receiving cavity, and the communication port (2123) is configured to communicate with the limit groove (213) and the glue guide groove (2121).

3. The power battery pack of claim 2, wherein the protective end cover (22) comprises a closure portion (221) and an abutment portion (222) which are integrally formed through an injection molding process, the abutment portion (222) is an annular protrusion formed by extending a surface of the closure portion (221) in a direction close to the plurality of battery cells (1), the closure portion (221) is disposed at an opening of a receiving groove (211) of the receiving grooves (211) and encloses the receiving groove (211), the abutment portion (222) is inserted into the receiving groove (211) to abut against a battery cell (1) of the plurality of battery cells (1), a glue reservoir communicating with the glue guide groove (2121) is formed between the abutment portion (222) and a groove wall of the receiving groove (211), and the insulating gel (4) filled in the glue reservoir is configured to bond the closure portion (221) to the lower casing (21).

4. The power battery pack of claim 3, wherein the glue potting structure (212) further comprises a glue overflow groove (2124), the glue overflow groove (2124) is disposed on the groove wall of the receiving groove (211) and communicates with the glue reservoir, and the glue overflow groove (2124) and the glue guide groove (2121) are symmetrically distributed on the groove wall of the receiving groove (211).

5. The power battery pack of claim 3, wherein the protective end cover (22) further comprises a vent cavity (223) and a weakened structure (224), the vent cavity (223) is disposed on the abutment portion (222), and a region, enclosed by the vent cavity (223), of the closure portion (221) is provided with an annular groove with a V-shaped or U-shaped cross section, to form the weakened structure (224), and a thickness of the weakened structure (224) is less than a thickness of a portion of the closure portion (221) excluding the region enclosed by the vent cavity (223).

6. The power battery pack of claim 4, wherein the protective end cover (22) further comprises a plurality of limit portions (225) configured to enclose the glue overflow groove (2124) and the glue guide groove (2121), an outer edge of the closure portion (221) extends in a direction facing away from a central axis to form the plurality of limit portions (225) uniformly distributed on the outer edge of the closure portion (221), the plurality of limit portions (225) are accommodated in corresponding glue overflow grooves (2124) and corresponding glue guide grooves (2121), and a protection fillet (226) is disposed at a corner of a side of a limit portion (225) of the plurality of limit portions (225) facing away from the closure portion (221).

7. The power battery pack of claim 1, wherein the electric control module (3) comprises an acquisition board set (31) and a battery management system, BMS, assembly (32), the BMS assembly (32) is disposed on an upper surface of the lower casing (21), a part of the acquisition board set (31) is integrated on the upper surface of the lower casing (21) and is electrically connected to the BMS assembly (32), and another part of the acquisition board set (31) is accommodated within the limit grooves (213) and is electrically connected to the plurality of battery cells (1).

8. The power battery pack of claim 7, wherein the electric control module (3) further comprises a temperature sensor (33), a side of the lower casing (21) facing towards the BMS assembly (32) is provided with a mounting through hole (215), one side of the temperature sensor (33) is connected to the BMS assembly (32), and another side of the temperature sensor (33) abuts against the plurality of battery cells (1) through the mounting through hole (215).

9. The power battery pack of claim 7, wherein the casing assembly (2) further comprises a casing upper cover (23), the casing upper cover (23) is covered on a side of the BMS assembly (32) facing away from the lower casing (21), a side of the lower casing (21) facing towards the casing upper cover (23) is provided with a mounting slot (214), a side of the casing upper cover (23) facing towards the lower casing (21) is provided with an insertion protrusion (231), and the insertion protrusion (231) is inserted into the mounting slot (214).

10. The power battery pack of claim 7, wherein the acquisition board set (31) and the lower casing (21) are integrally formed through injection molding as a one-piece structure.
